# FASCICULE DE BREVET EUROPEEN

(11) **EP 3 071 077 B1**
(45) Date de publication et mention de la délivrance du brevet: **21.03.2018**
(21) Numéro de dépôt: 14809481.6
(22) Date de dépôt: 10.11.2014
(51) Int. Cl.: A47J 19/02

(54) **APPAREIL ÉLECTROMÉNAGER DE PRÉPARATION CULINAIRE COMPORTANT UNE VIS DE PRESSAGE PRÉSENTANT UN APPUI AXIAL**
HAUSHALTSGERÄT ZUR ZUBEREITUNG VON LEBENSMITTELN, MIT EINER PRESSENSCHRAUBE MIT AXIALABSTÜTZUNG
HOUSEHOLD APPLIANCE FOR CULINARY PREPARATION, COMPRISING A PRESS SCREW HAVING AN AXIAL SUPPORT

(30) Priorité: 20.11.2013 FR 1361421
(43) Date de publication de la demande: 28.09.2016
(73) Titulaire: SEB S.A., 69130 Ecully (FR)
(72) Inventeur: DELAVAUD, Fabien, 64510 Baliros (FR); RAUDE, Christian, 64160 Buros (FR)
(74) Mandataire: Bourrières, Patrice
(86) Numéro de dépôt international: PCT/FR2014/052870
(87) Numéro de publication internationale: WO 2015/075349

(56) Documents cités:
- WO-A1-2011/077038
- FR-A1- 2 990 121

## Description

La présente invention concerne le domaine technique des appareils électroménagers de préparation culinaire pour extraire des jus ou des coulis à partir de fruits et/ou de légumes.

La présente invention concerne plus particulièrement les appareils électroménagers de préparation culinaire comportant une vis de pressage guidée axialement dans un couvercle.

Le document WO 2011/077038 divulgue un appareil électroménager de préparation culinaire prévu pour le pressage d'aliments, comportant un filtre bloqué axialement par rapport à un couvercle, une vis de pressage agencée dans le filtre, dans lequel la vis de pressage présente une tête axiale logée dans un palier monté dans le couvercle. La vis de pressage entrainée en rotation dans le filtre exerce des efforts verticaux importants sur le couvercle, pouvant générer des phénomènes d'échauffement importants au niveau de la tête axiale et du palier.

Un objet de la présente invention est de proposer un appareil du type précité présentant une construction robuste adaptée à un usage prolongé et/ou intensif.

Un autre objet de la présente invention est de proposer un appareil du type précité présentant une construction robuste, qui reste simple et d'un coût modéré.

Ces objets sont atteints avec un appareil électroménager de préparation culinaire pour le pressage d'aliments, comportant une enceinte de travail logeant une tête de pressage comprenant une vis de pressage entrainée en rotation dans un filtre bloqué axialement par un couvercle de l'enceinte de travail, la tête de pressage comportant une tête axiale s'étendant dans un palier monté dans le couvercle, la tête axiale présentant une extrémité libre venant en appui axial dans le couvercle, du fait que l'extrémité libre vient en appui contre une butée rotative. La butée rotative facilite la rotation de la tête de pressage et permet de mieux encaisser les efforts axiaux exercés par la tête de pressage. La butée rotative permet de limiter voire de supprimer les échauffements au niveau de l'appui de la tête axiale dans le couvercle. Ces dispositions permettent de limiter les phénomènes d'usure et/ou de déformation au niveau de la tête de pressage et de son appui dans le couvercle. Il en résulte que le jeu entre la vis de pressage et le filtre est mieux contrôlé. Ce jeu joue un rôle important dans l'efficacité de pressage. L'utilisation de la butée rotative permet ainsi une meilleure durabilité de l'appareil et contribue aussi à la conservation d'une bonne efficacité de pressage.

Avantageusement alors, le palier comporte un corps tubulaire engagé partiellement dans un tube logeant la butée rotative. Cette disposition permet de simplifier le montage de la butée rotative. Cette disposition contribue aussi à améliorer encore la durabilité de l'appareil.

Selon un mode de réalisation avantageux, la butée rotative repose contre une butée à aiguilles. Cette disposition contribue à l'obtention d'une construction compacte. En alternative, d'autres modes de réalisation peuvent être envisagés, notamment l'utilisation d'un roulement à billes.

Avantageusement alors, le tube loge la butée à aiguilles. Cette disposition permet d'obtenir une construction simple et robuste.

Avantageusement alors, la butée à aiguilles est agencée dans le tube entre la butée rotative et une butée fixe. Cette disposition permet de simplifier encore la construction. En alternative, la butée fixe pourrait notamment être issue du couvercle ou de la butée rotative.

Selon une forme de réalisation avantageuse, la butée à aiguilles comporte des aiguilles en acier inoxydable.

Selon une forme de réalisation avantageuse, la butée rotative est réalisée en acier inoxydable.

Selon une forme de réalisation avantageuse, la tête axiale est réalisée en acier inoxydable.

Avantageusement alors, la dureté des aiguilles est supérieure à la dureté de la butée rotative. Cette disposition permet de limiter la déformation des aiguilles.

Avantageusement encore, la dureté de la butée rotative est supérieure à la dureté de l'extrémité libre de la tête axiale. Cette disposition permet de limiter la déformation et/ou l'usure de la butée rotative soumise aux efforts exercés par la tête axiale.

Avantageusement encore, la tête axiale est insérée dans un moyeu supérieur de la tête de pressage. En alternative, l'extrémité métallique de la tête axiale pourrait notamment être rapportée sur une protubérance axiale du moyeu supérieur de la vis de pressage.

Avantageusement alors, le moyeu supérieur porte une rondelle de reprise d'effort autour de la tête axiale. Cette disposition permet de mieux répartir les efforts exercés par la tête axiale sur le moyeu supérieur. Cette disposition permet aussi de réduire la section et/ou la hauteur de la tête axiale.

Avantageusement alors, la tête axiale est insérée en force dans la rondelle de reprise d'effort. Cette disposition permet d'obtenir un montage simple et robuste.

Avantageusement encore, la rondelle de reprise d'effort est montée dans un logement supérieur du moyeu supérieur. Cette disposition permet d'améliorer le maintien de la rondelle de reprise d'effort.

Selon un mode de réalisation, l'enceinte de travail est montée sur un boîtier motorisé présentant une sortie d'entraînement pour entraîner en rotation la tête de pressage disposée dans l'enceinte de travail. Avantageusement, l'enceinte de travail est montée amovible sur le boîtier motorisé. En alternative, une partie de l'enceinte de travail pourrait notamment être solidaire du boîtier motorisé.

L'invention sera mieux comprise à l'étude d'un exemple de réalisation et de deux variantes, pris à titre nullement limitatif, illustrés dans les figures annexées, dans lesquelles :
- la figure 1 illustre un exemple d'appareil électroménager de préparation culinaire selon l'invention, représenté en élévation et en éclaté,
- la figure 2 est une vue en coupe verticale de l'appareil électroménager de préparation culinaire illustré sur la figure 1, comportant l'un des filtres,
- la figure 3 est une vue agrandie en coupe de l'appui axial de la tête de pressage de l'appareil illustré sur les figures 1 et 2,
- la figure 4 est une vue en perspective de la tête axiale de la tête de pressage de l'appareil illustré sur les figures 1 à 3,
- la figure 5 est une vue en éclaté de la butée à aiguilles utilisée dans le couvercle de l'appareil illustré sur les figures 1 à 3,
- la figure 6 est une vue en perspective de dessous du couvercle de l'appareil illustré sur les figures 1 à 3,
- les figures 7 et 8 sont deux variantes de réalisation d'une enceinte de travail d'un appareil selon l'invention.

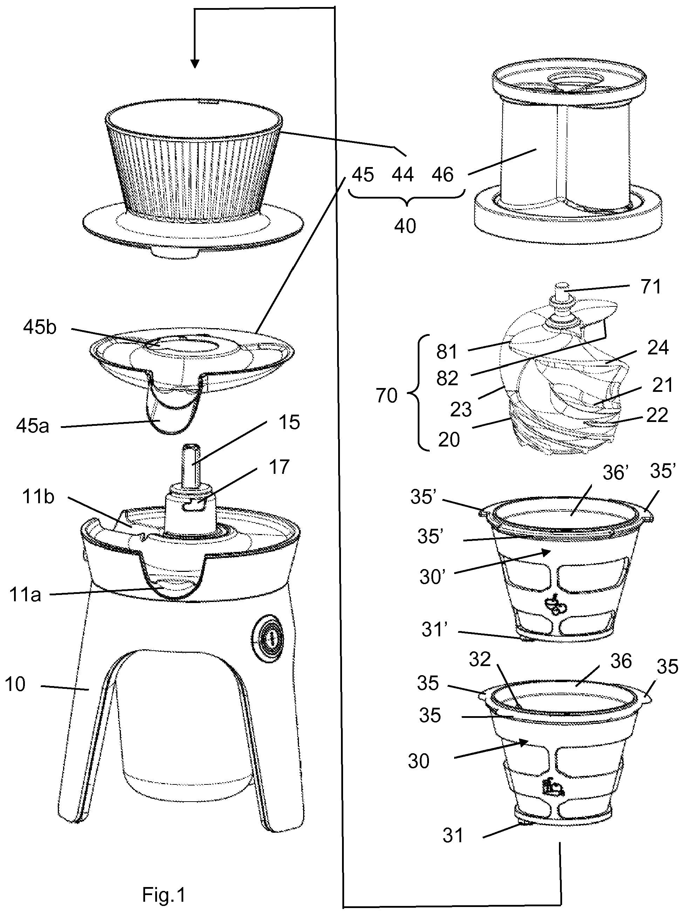

L'appareil électroménager de préparation culinaire pour le pressage d'aliments illustré sur la figure 1 comporte un boîtier motorisé 10, une enceinte de travail 40, au moins un filtre 30, 30', une tête de pressage 70 pouvant être agencée dans le filtre 30, 30'. Les filtres 30 ; 30' illustrés sur la figure 1 sont interchangeables et comportent par exemple des parties filtrantes plus ou moins fines, pour extraire des jus non pulpeux ou des jus pulpeux.

La tête de pressage 70 comprend une vis de pressage 20. La vis de pressage 20 présente sur sa périphérie plusieurs filets inclinés 21, 22. La tête de pressage 70 comprend avantageusement au moins un bord d'attaque 81, 82 pour trancher ou cisailler les aliments introduits dans l'enceinte de travail 40. Dans l'exemple de réalisation illustré sur les figures, la vis de pressage 20 présente deux bords d'attaque 81, 82 opposés prolongés chacun par un filet principal 23, 24 incliné. La vis de pressage 20 comporte un corps extérieur 25 surmoulé sur un insert 26.

L'enceinte de travail 40 comporte une sortie d'évacuation d'aliments filtrés 45a et une sortie d'évacuation de résidus 45b. La sortie d'évacuation de résidus 45b communique avec l'espace intérieur du filtre 30 ; 30' entourant la vis de pressage 20. La sortie d'évacuation d'aliments filtrés 45a communique avec l'espace interne de l'enceinte de travail 40 à l'extérieur du filtre 30 ; 30'. Ainsi la sortie d'évacuation d'aliments filtrés 45a est agencée à l'extérieur du filtre 30 ; 30'. Le filtre 30 ; 30' comporte une sortie de décharge de résidus 31 ; 31' communiquant avec une zone intérieure du filtre 30; 30', disposée à l'extérieur de la vis de pressage 20 agencée dans l'enceinte de travail 40. La sortie de décharge de résidus 31 ; 31' est disposée à l'aplomb de la sortie d'évacuation de résidus 45b lorsque le filtre 30 ; 30' est disposé dans l'enceinte de travail 40.

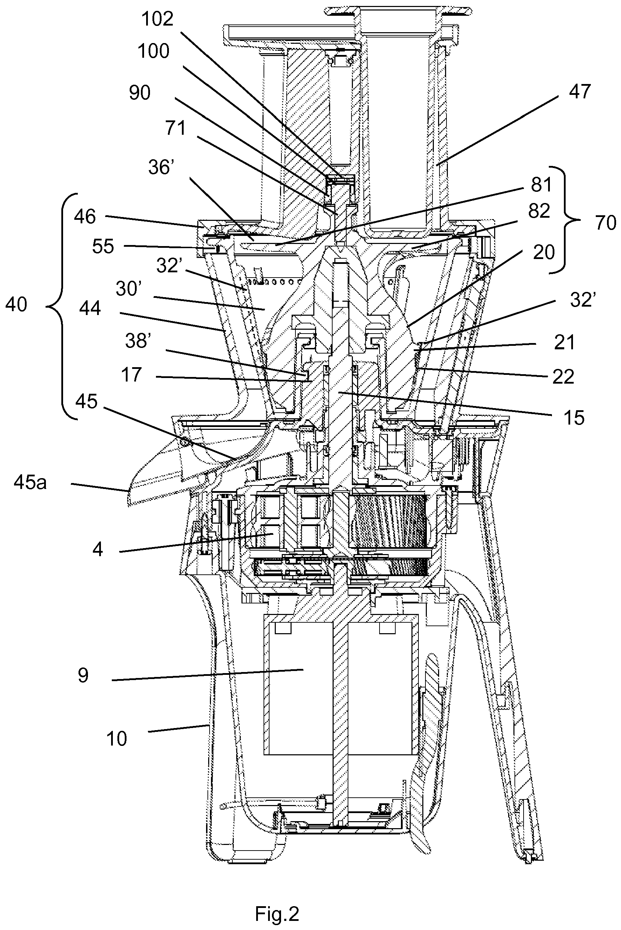

Dans l'exemple de réalisation illustré sur les figures, l'enceinte de travail 40 est montée amovible sur le boîtier motorisé 10. Le boîtier motorisé 10 présente une sortie d'entraînement 15 pour entraîner en rotation la tête de pressage 70 disposée dans l'enceinte de travail 40. Le boîtier motorisé 10 forme un socle sur lequel repose l'enceinte de travail 40. Le boîtier motorisé 10 loge un moteur 9 électrique, représenté schématiquement sur la figure 2. Le moteur 9 est relié à la sortie d'entrainement 15, si désiré par l'intermédiaire d'un dispositif de transmission 4. L'enceinte de travail 40 comporte un récepteur de jus inférieur 45, un déflecteur de jus 44 et un couvercle 46. La sortie d'évacuation d'aliments filtrés 45a est formée sur le récepteur de jus inférieur 45. La sortie d'évacuation de résidus 45b est formée dans le récepteur de jus inférieur 45. Le boîtier motorisé 10 comporte une échancrure 11a prévue pour recevoir la sortie d'évacuation d'aliments filtrés 45a. Le boîtier motorisé 10 présente une autre échancrure 11b agencée en dessous de la sortie d'évacuation de résidus 45b, prévue pour recevoir les résidus de pressage issus de la sortie de décharge de résidus 31 ; 31' du filtre 30 ; 30' agencé dans l'enceinte de travail 40.

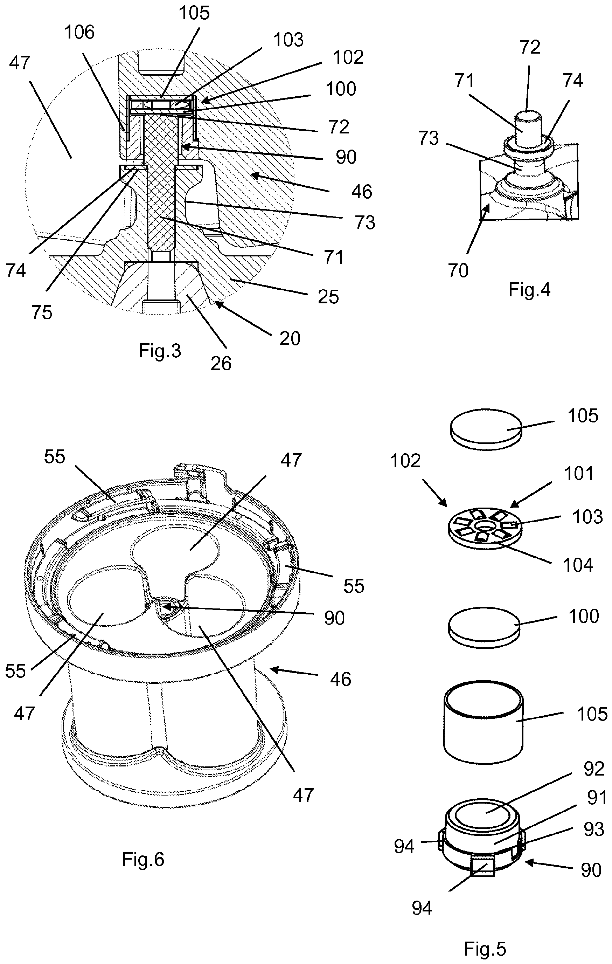

Le boitier motorisé 10 présente des empreintes 17 prévues pour recevoir des ergots primaires 38' du filtre 30, 30'. Le filtre 30 ; 30' est ainsi directement monté et verrouillé dans les empreintes 17 du boîtier motorisé 10 avec un montage de type baïonnette. Le filtre 30 ; 30' est ainsi bloqué en rotation et en translation sur le boîtier motorisé 10. Le récepteur de jus inférieur 45 agencé entre le boîtier motorisé 10 et le filtre 30; 30' est bloqué en rotation par l'échancrure 11a et en translation par le filtre 30; 30', de sorte qu'il est correctement maintenu en place sur le boîtier motorisé 10. Le couvercle 46 est monté directement sur le filtre 30 ; 30', par l'intermédiaire d'ergots secondaires 35, 35' du filtre 30 ; 30', qui coopèrent avec des nervures 55 du couvercle 46, visibles également sur la figure 6. Le couvercle 46 est ainsi verrouillé avec un montage de type baïonnette sur le filtre 30 ; 30'. Le couvercle 46 comporte au moins une goulotte 47 communiquant avec l'intérieur de l'enceinte de travail 40. L'enceinte de travail 40 loge ainsi la tête de pressage 70 comprenant la vis de pressage 20 entrainée en rotation dans le filtre 30 ; 30' bloqué axialement par le couvercle 46 de l'enceinte de travail 40.

Le filtre 30 ; 30', présente une ouverture 36 ; 36' pour la mise en place de la tête de pressage 70. L'ouverture 36 ; 36' est agencée en regard du couvercle 46. Ainsi, le couvercle 46 est assemblé et verrouillé avec le filtre 30 ; 30' pour former une enceinte de filtration contenant la tête de pressage 70. Le filtre 30 ; 30' présente des nervures internes 32 ; 32' prévues pour coopérer avec les filets inclinés 21, 22 de la vis de pressage 20.

Dans l'exemple de réalisation illustré sur les figures, le filtre 30 ; 30' présente une configuration tronconique avec un angle d'ouverture de 15° environ. Plus l'angle d'ouverture est important, notamment supérieur ou égal à 10°, plus le respect de la position axiale de la tête de pressage 70 dans le filtre 30, 30' est important pour conserver de bonnes propriétés d'extraction.

Tel que mieux visible sur la figure 3, la tête de pressage 70 comporte une tête axiale 71 s'étendant dans un palier 90 monté dans le couvercle 46. La tête axiale 71 présente une extrémité libre 72 venant en appui axial dans le couvercle 46. Le palier 90 présente avantageusement une ouverture chanfreinée. Le palier 90 présente de préférence un jeu de plus de 1/10^{e} de mm avec la tête axiale 71, par exemple un jeu de l'ordre de 0,5 mm.

Plus particulièrement selon l'invention, l'extrémité libre 72 de la tête axiale 71 vient en appui contre une butée rotative 100. La butée rotative 100 est montée libre en rotation par rapport au couvercle 46. La butée rotative 100 est portée par le couvercle 46. La butée rotative 100 est agencée dans le couvercle 46 derrière le palier 90. La butée rotative 100 peut présenter un jeu axial par rapport au couvercle 46. La butée rotative 100 peut venir directement ou indirectement en appui axial contre des organes de roulement 101 pouvant eux-mêmes venir directement ou indirectement en appui axial contre le couvercle 46. Les organes de roulement 101 sont maintenus axialement entre la butée rotative 100 et le couvercle 46. L'extrémité libre 72 de la tête axiale 71 est de préférence plane pour maximiser les surfaces de contact entre l'extrémité libre 72 et la butée rotative 100.

Les organes de roulement 101 présentent avantageusement une surface d'appui cylindrique. Plus particulièrement dans l'exemple de réalisation illustré sur les figures 1 à 6, la butée rotative 100 repose contre une butée à aiguilles 102. La butée à aiguilles 102 comporte des aiguilles 103 portées par une cage 104. Les aiguilles 103 sont sensiblement cylindriques. En d'autres termes, les aiguilles 103 sont formées par des rouleaux fins. De ce fait, la butée rotative 100 repose directement contre les organes de roulement 101 formés par les aiguilles 103 lorsque l'extrémité libre 72 de la tête axiale 71 est en appui contre la butée rotative 100.

Les aiguilles 103 sont avantageusement réalisées en acier inoxydable. La cage 104 peut notamment être réalisée en matière plastique, par exemple en polyamide chargé. Cette disposition permet de limiter les échauffements. Cette disposition contribue aussi à limiter le bruit de roulement.

Tel que visible sur la figure 3, le palier 90 comporte un corps tubulaire 91 engagé partiellement dans un tube 106. Le palier 90 comporte un passage axial 92 prévu pour l'insertion avec jeu de la tête axiale 71. Le palier 90 comporte une bordure extérieure 93 prévue pour supporter une extrémité du tube 106. Le palier 90 comporte au moins une protubérance externe 94 prévue pour faciliter l'insertion du palier 90 dans le couvercle 46. Le palier 90 peut notamment être réalisé en polyamide et être assemblé avec le couvercle 46 par soudage à ultrasons. Le tube 106 loge la butée rotative 100. La butée rotative 100 peut reposer sur le corps tubulaire 91 du palier 90 lorsque la tête axiale 71 n'est pas engagée dans le passage axial 92. La butée rotative 100 est formée par un disque indépendant de la butée à aiguilles 102. Le tube 106 loge la butée à aiguilles 102. La butée à aiguilles 102 est agencée dans le tube 106 entre la butée rotative 100 et une butée fixe 105. De ce fait, les organes de roulement 101 formés par les aiguilles 103 reposent directement contre la butée fixe 105 lorsque l'extrémité libre 72 de la tête axiale 71 est en appui contre la butée rotative 100. La butée fixe 105 est formée par un autre disque indépendant de la butée à aiguilles 102. Le tube 106 loge la butée fixe 105. La butée rotative 100, la butée à aiguilles 102 et la butée fixe 105 sont contenues dans le tube 106 entre le corps tubulaire 91 du palier 90 et le couvercle 46.

Les organes de roulement 101 agencés entre la butée rotative 100 et la butée fixe 105 permettent à la fois un appui axial entre la butée rotative 100 et la butée fixe 105 lorsque l'extrémité libre 72 de la tête axiale 71 est en appui contre la butée rotative 100, ainsi qu'un mouvement de rotation entre la butée rotative 100 et la butée fixe 105, du fait de la rotation des organes de roulement 101 d'une part contre le disque formant la butée rotative 100 et d'autre part contre l'autre disque formant la butée fixe 105. Ainsi la butée rotative 100 est montée axialement contre un appui rotatif mobile en rotation par rapport au couvercle 46, ledit appui rotatif étant formé par les organes de roulement 101.

Le tube 106, la butée rotative 100, la butée fixe 105 et la tête axiale 71 sont avantageusement réalisés en acier inoxydable. De préférence, la dureté des aiguilles 103 est supérieure à la dureté de la butée rotative 100. De préférence encore, la dureté de la butée rotative 100 est supérieure à la dureté de l'extrémité libre 72 de la tête axiale 71. La dureté des aiguilles 103 est par exemple de l'ordre de 55 HRC, la dureté de la butée rotative 100 et de la butée fixe 105 est par exemple de l'ordre de 40 HRC, la dureté de l'extrémité libre 72 de la tête axiale 71 est par exemple de l'ordre de 25 HRC.

Tel que représenté sur les figures 3 et 4, la tête axiale 71 est insérée dans un moyeu supérieur 73 de la tête de pressage 70. Le moyeu supérieur 73 porte une rondelle de reprise d'effort 74 autour de la tête axiale 71. La tête axiale 71 est avantageusement insérée en force dans la rondelle de reprise d'effort 74. La rondelle de reprise d'effort 74 est par exemple réalisée en acier inoxydable. Tel que bien visible sur la figure 3, la rondelle de reprise d'effort 74 est montée dans un logement supérieur 75 du moyeu supérieur 73. En alternative, la tête de pressage 70 pourrait notamment être surmoulée sur la tête axiale 71.

L'appareil selon l'invention s'utilise et fonctionne de la manière suivante.

L'utilisateur met en place le récepteur de jus inférieur 45 sur le boîtier motorisé 10, puis le déflecteur de jus 44 sur le récepteur de jus inférieur 45. L'utilisateur verrouille ensuite le filtre 30 ; 30' sur le boîtier motorisé 10, met en place la tête de pressage 70 dans le filtre 30 ; 30' par l'ouverture 36 ; 36', puis verrouille le couvercle 46 sur le filtre 30 ; 30'. La tête axiale 71 de la tête de pressage 70 est alors engagée dans le palier 90 du couvercle 46. Les aliments introduits dans l'enceinte de travail 40 par la goulotte 47 sont pressés par la vis de pressage 20 contre les parois latérales du filtre 30 ; 30'. Les filets inclinés 21, 22 de la vis de pressage 20 coopérant avec les nervures internes 32 ; 32' du filtre 30 ; 30' exercent un effort axial repoussant la vis de pressage 20 contre le couvercle 46. Une forte pression est ainsi exercée par l'extrémité libre 72 de la tête axiale 71 sur la butée rotative 100. Le disque formant la butée rotative 100 porte contre les aiguilles 103 de la butée à aiguilles 102 qui viennent en appui contre l'autre disque formant la butée fixe 105. La rotation de la tête de pressage 70 entraîne la rotation de la butée rotative 100 à la même vitesse de rotation. La rotation de la butée rotative 100 à une vitesse donnée dans un sens entraîne la rotation de la cage 104 de la butée à aiguilles 102 à demi-vitesse dans le même sens. Les frottements et les glissements entre les pièces en mouvement relatif (butée rotative 100, aiguilles 103 formant les organes de roulement 101, butée fixe 105) sont notoirement diminués par rapport à une tête axiale 71 comportant une extrémité libre en appui tournant dans le couvercle. Il en résulte une meilleure longévité des performances d'extraction de l'appareil.

A titre de variante, les organes de roulement 101 ne présentent pas nécessairement une géométrie cylindrique. En d'autres termes, les organes de roulement 101 ne sont pas nécessairement formés par des aiguilles 103 ou par des rouleaux. Les organes de roulement 101 peuvent notamment être formés par des éléments présentant au moins un axe de révolution, tels que par exemple des billes ou par des ogives. Les organes de roulement 101 sont avantageusement réalisés en acier inoxydable.

A titre de variante, les organes de roulement 101 ne sont pas nécessairement indépendants de la butée rotative 100 et/ou de la butée fixe 105. Les organes de roulement 101 peuvent notamment être intégrés à des roulements formant également la butée rotative 100 et/ou la butée fixe 105. De ce fait, la butée rotative 100 n'est pas nécessairement indépendante de la butée fixe 105.

A titre de variante, la butée rotative 100 ne présente pas nécessairement un jeu axial par rapport au couvercle 46.

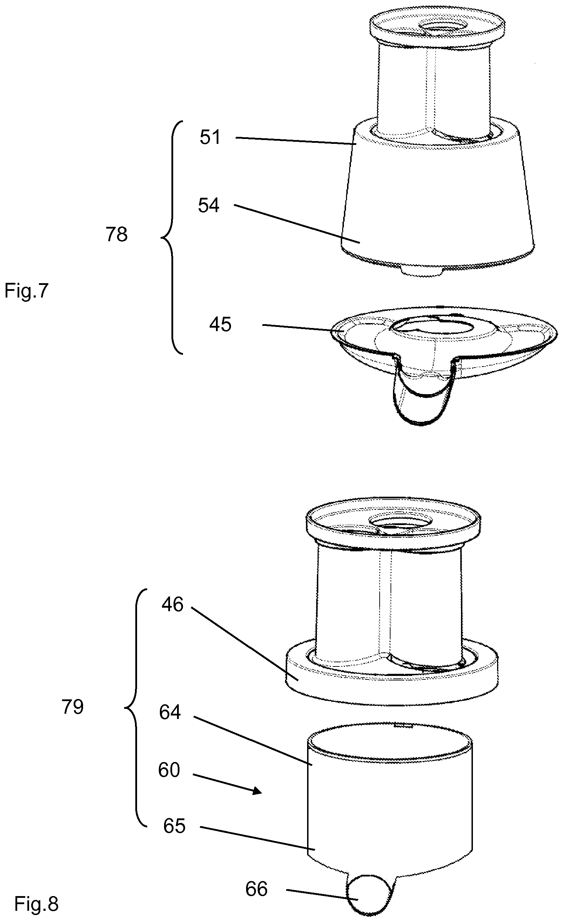

A titre de variante, l'enceinte de travail 40 ne comporte pas nécessairement un déflecteur de jus 44 indépendant. La figure 7 illustre un couvercle 51 intégrant un déflecteur de jus 54. Le couvercle 51 peut être utilisé avec le récepteur de jus inférieur 45 pour former une enceinte de travail 78 logeant la tête de pressage 70 comprenant la vis de pressage 20 entrainée en rotation dans le filtre 30 ; 30' bloqué axialement par le couvercle 51. Le filtre 30 ; 30' est alors verrouillé avec le couvercle 51. Le déflecteur de jus 54 est posé sur le récepteur de jus inférieur 45.

A titre de variante, l'enceinte de travail 40 ne comporte pas nécessairement un couvercle 46 verrouillé sur le filtre 30 ; 30'. La figure 8 illustre un récipient de travail 60 intégrant un déflecteur de jus 64 et un récepteur de jus inférieur 65 présentant au moins une sortie d'évacuation d'aliments filtrés 66. Le récipient de travail 60 peut être utilisé avec le couvercle 46 pour former une enceinte de travail 79 logeant la tête de pressage 70 comprenant la vis de pressage 20 entrainée en rotation dans le filtre 30 ; 30' bloqué axialement par le couvercle 46.

A titre de variante, la vis de pressage 20 ne comporte pas nécessairement deux filets principaux 23, 24. La vis de pressage 20 peut notamment comporter au moins un filet principal, et de préférence entre un et trois filets principaux.

A titre de variante, la vis de pressage 20 ne comporte pas nécessairement au moins un bord d'attaque 81, 82. La tête de pressage 70 peut comporter un disque de prédécoupe solidaire de la vis de pressage 20, ou encore un disque de prédécoupe indépendant de la vis de pressage 20.

La présente invention n'est nullement limitée aux exemples de réalisation décrits, mais englobe de nombreuses modifications dans le cadre des revendications.

## Revendications

1. Appareil électroménager de préparation culinaire pour le pressage d'aliments, comportant une enceinte de travail (40 ; 78 ; 79) logeant une tête de pressage (70) comprenant une vis de pressage (20) entrainée en rotation dans un filtre (30 ; 30') bloqué axialement par un couvercle (46 ; 51) de l'enceinte de travail (40; 78; 79), la tête de pressage (70) comportant une tête axiale (71) s'étendant dans un palier (90) monté dans le couvercle (46 ; 51), la tête axiale (71) présentant une extrémité libre (72) venant en appui axial dans le couvercle (46 ; 51), **caractérisé en ce que** l'extrémité libre (72) vient en appui contre une butée rotative (100).

2. Appareil électroménager de préparation culinaire pour le pressage d'aliments selon la revendication 1, **caractérisé en ce que** le palier (90) comporte un corps tubulaire (91) engagé partiellement dans un tube (106) logeant la butée rotative (100).

3. Appareil électroménager de préparation culinaire pour le pressage d'aliments selon l'une des revendications 1 ou 2, **caractérisé en ce que** la butée rotative (100) repose contre une butée à aiguilles (102).

4. Appareil électroménager de préparation culinaire pour le pressage d'aliments selon les revendications 2 et 3, **caractérisé en ce que** le tube (106) loge la butée à aiguilles (102).

5. Appareil électroménager de préparation culinaire pour le pressage d'aliments selon la revendication 4, **caractérisé en ce que** la butée à aiguilles (102) est agencée dans le tube (106) entre la butée rotative (100) et une butée fixe (105).

6. Appareil électroménager de préparation culinaire pour le pressage d'aliments selon l'une des revendications 3 à 5, **caractérisé en ce que** la butée à aiguilles (102) comporte des aiguilles (103) en acier inoxydable.

7. Appareil électroménager de préparation culinaire pour le pressage d'aliments selon l'une des revendications 1 à 6, **caractérisé en ce que** la butée rotative (100) est réalisée en acier inoxydable.

8. Appareil électroménager de préparation culinaire pour le pressage d'aliments selon l'une des revendications 1 à 7, **caractérisé en ce que** la tête axiale (71) est réalisée en acier inoxydable.

9. Appareil électroménager de préparation culinaire pour le pressage d'aliments selon les revendications 6 et 7, **caractérisé en ce que** la dureté des aiguilles (103) est supérieure à la dureté de la butée rotative (100).

10. Appareil électroménager de préparation culinaire pour le pressage d'aliments selon les revendications 7 et 8, **caractérisé en ce que** la dureté de la butée rotative (100) est supérieure à la dureté de l'extrémité libre (72) de la tête axiale (71).

11. Appareil électroménager de préparation culinaire pour le pressage d'aliments selon l'une des revendications 1 à 10, **caractérisé en ce que** la tête axiale (71) est insérée dans un moyeu supérieur (73) de la tête de pressage (70).

12. Appareil électroménager de préparation culinaire pour le pressage d'aliments selon la revendication 11, **caractérisé en ce que** le moyeu supérieur (73) porte une rondelle de reprise d'effort (74) autour de la tête axiale (71).

13. Appareil électroménager de préparation culinaire pour le pressage d'aliments selon la revendication 12, **caractérisé en ce que** la tête axiale (71) est insérée en force dans la rondelle de reprise d'effort (74).

14. Appareil électroménager de préparation culinaire pour le pressage d'aliments selon l'une des revendications 12 ou 13, **caractérisé en ce que** la rondelle de reprise d'effort (74) est montée dans un logement supérieur (75) du moyeu supérieur (73).

15. Appareil électroménager de préparation culinaire pour le pressage d'aliments selon l'une des revendications 1 à 14, **caractérisé en ce que** l'enceinte de travail (40 ; 78 ; 79) est montée sur un boîtier motorisé (10) présentant une sortie d'entraînement (15) pour entraîner en rotation la tête de pressage (70) disposée dans l'enceinte de travail (40 ; 78 ; 79).

## Patentansprüche

1. Elektrisches Haushaltsgerät zur Lebensmittelzubereitung für das Pressen von Nahrungsmitteln, das einen Arbeitsbehälter (40; 78; 79) aufweist, in dem ein Presskopf (70) untergebracht ist, der eine Pressschraube (20) umfasst, die in einem Filter (30; 30') in Drehung angetrieben wird, der axial durch eine Abdeckung (46; 51) des Arbeitsbehälters (40; 78; 79) blockiert ist, wobei der Presskopf (70) einen axialen Kopf (71) aufweist, der sich in einem Lager (90) erstreckt, das in der Abdeckung (46; 51) angebracht ist, wobei der axiale Kopf (71) ein freies Ende (72) aufweist, das axial in der Abdeckung (46; 51) zur Anlage kommt, **dadurch gekennzeichnet, dass** das freie Ende (72) gegen einen drehbaren Anschlag (100) zur Anlage kommt.

2. Elektrisches Haushaltsgerät zur Lebensmittelzubereitung für das Pressen von Nahrungsmitteln nach Anspruch 1, **dadurch gekennzeichnet, dass** das Lager (90) einen rohrförmigen Körper (91) aufweist, der teilweise in ein Rohr (106) eingreift, in dem der drehbare Anschlag (100) untergebracht ist.

3. Elektrisches Haushaltsgerät zur Lebensmittelzubereitung für das Pressen von Nahrungsmitteln nach einem der Ansprüche 1 oder 2, **dadurch gekennzeichnet, dass** der drehbare Anschlag (100) an einem Nadellager (102) anliegt.

4. Elektrisches Haushaltsgerät zur Lebensmittelzubereitung für das Pressen von Nahrungsmitteln nach den Ansprüchen 2 und 3, **dadurch gekennzeichnet, dass** in dem Rohr (106) das Nadellager (102) untergebracht ist.

5. Elektrisches Haushaltsgerät zur Lebensmittelzubereitung für das Pressen von Nahrungsmitteln nach Anspruch 4, **dadurch gekennzeichnet, dass** das Nadellager (102) in dem Rohr (106) zwischen dem drehbaren Anschlag (100) und einem festen Anschlag (105) angeordnet ist.

6. Elektrisches Haushaltsgerät zur Lebensmittelzubereitung für das Pressen von Nahrungsmitteln nach einem der Ansprüche 3 bis 5, **dadurch gekennzeichnet, dass** das Nadellager (102) Nadeln (103) aus rostfreiem Stahl umfasst.

7. Elektrisches Haushaltsgerät zur Lebensmittelzubereitung für das Pressen von Nahrungsmitteln nach einem der Ansprüche 1 bis 6, **dadurch gekennzeichnet, dass** der drehbare Anschlag (100) aus rostfreiem Stahl hergestellt ist.

8. Elektrisches Haushaltsgerät zur Lebensmittelzubereitung für das Pressen von Nahrungsmitteln nach einem der Ansprüche 1 bis 7, **dadurch gekennzeichnet, dass** der axiale Kopf (71) aus rostfreiem Stahl hergestellt ist.

9. Elektrisches Haushaltsgerät zur Lebensmittelzubereitung für das Pressen von Nahrungsmitteln nach den Ansprüchen 6 und 7, **dadurch gekennzeichnet, dass** die Härte der Nadeln (103) größer als die Härte des drehbaren Anschlags (100) ist.

10. Elektrisches Haushaltsgerät zur Lebensmittelzubereitung für das Pressen von Nahrungsmitteln nach den Ansprüchen 7 und 8, **dadurch gekennzeichnet, dass** die Härte des drehbaren Anschlags (100) größer als die Härte des freien Endes (72) des axialen Kopfs (71) ist.

11. Elektrisches Haushaltsgerät zur Lebensmittelzubereitung für das Pressen von Nahrungsmitteln nach einem der Ansprüche 1 bis 10, **dadurch gekennzeichnet, dass** der axiale Kopf (71) in eine obere Nabe (73) des Presskopfs (70) eingeführt ist.

12. Elektrisches Haushaltsgerät zur Lebensmittelzubereitung für das Pressen von Nahrungsmitteln nach Anspruch 11, **dadurch gekennzeichnet, dass** die obere Nabe (73) eine Unterlegscheibe zur Kraftaufnahme (74) um den axialen Kopf (71) trägt.

13. Elektrisches Haushaltsgerät zur Lebensmittelzubereitung für das Pressen von Nahrungsmitteln nach Anspruch 12, **dadurch gekennzeichnet, dass** der axiale Kopf (71) mit Gewalt in die Unterlegscheibe zur Kraftaufnahme (74) eingesetzt ist.

14. Elektrisches Haushaltsgerät zur Lebensmittelzubereitung für das Pressen von Nahrungsmitteln nach einem der Ansprüche 12 oder 13, **dadurch gekennzeichnet, dass** die Unterlegscheibe zur Kraftaufnahme (74) in einer oberen Behausung (75) der oberen Nabe (73) angebracht ist.

15. Elektrisches Haushaltsgerät zur Lebensmittelzubereitung für das Pressen von Nahrungsmitteln nach einem der Ansprüche 1 bis 14, **dadurch gekennzeichnet, dass** der Arbeitsbehälter (40; 78; 79) an einem motorisierten Gehäuse (10) angebracht ist und einen Antriebsausgang (15) aufweist, um den Presskopf (70), der an dem Arbeitsbehälter (40; 78; 79) angebracht ist, in Drehung anzutreiben.

## Claims

1. Household appliance for culinary preparation for pressing food, comprising a work chamber (40; 78; 79) housing a press head (70) comprising a press screw (20) rotated in a filter (30; 30') axially blocked by a lid (46; 51) of the work chamber (40; 78; 79), the press head (70) comprising an axial head (71) extending into a bearing (90) assembled in the lid (46; 51), the axial head (71) exhibiting a free end (72) axially supporting in the lid (46; 51), **characterised in that** the free end (72) supports against a rotating stopper (100).

2. Household appliance for culinary preparation for pressing food according to claim 1, **characterised in that** the bearing (90) comprises a tubular body (91) partially inserted in a tube (106) housing the rotating stopper (100).

3. Household appliance for culinary preparation for pressing food according to claims 1 or 2, **characterised in that** the rotating stopper (100) rests against a needle stopper (102).

4. Household appliance for culinary preparation for pressing food according to claims 2 and 3, **characterised in that** the tube (106) houses the needle stopper (102).

5. Household appliance for culinary preparation for pressing food according to claim 4, **characterised in that** the needle stopper (102) is arranged in the tube (106) between the rotating stopper (100) and a fixed stopper (105).

6. Household appliance for culinary preparation for pressing food according to one of the claims 3 to 5, **characterised in that** the needle stopper (102) comprises stainless steel needles (103).

7. Household appliance for culinary preparation for pressing food according to one of the claims 1 to 6, **characterised in that** the rotating stopper (100) is made of stainless steel.

8. Household appliance for culinary preparation for pressing food according to one of the claims 1 to 7, **characterised in that** the axial head (71) is made of stainless steel.

9. Household appliance for culinary preparation for pressing food according to claims 6 and 7, **characterised in that** the hardness of the needles (103) is harder than the hardness of the rotating stopper (100).

10. Household appliance for culinary preparation for pressing food according to claims 7 and 8, **characterised in that** the hardness of the rotating stopper (100) is harder than the hardness of the free end (72) of the axial head (71).

11. Household appliance for culinary preparation for pressing food according to one of the claims 1 to 10, **characterised in that** the axial head (71) is inserted into a top axle (73) of the press head (70).

12. Household appliance for culinary preparation for pressing food according to claim 11, **characterised in that** the top axle (73) carries a washer for transferring stresses (74) around the axial head (71).

13. Household appliance for culinary preparation for pressing food according to claim 12, **characterised in that** the axial head (71) is inserted with force into the washer for transferring stresses (74).

14. Household appliance for culinary preparation for pressing food according to one of the claims 12 or 13, **characterised in that** the washer for transferring stresses (74) is assembled in a top housing (75) of the top axle (73).

15. Household appliance for culinary preparation for pressing food according to one of the claims 1 to 14, **characterised in that** the work chamber (40; 78; 79) is assembled on a motorised case (10), exhibiting a drive outlet (15) to rotate the press head (70) arranged in the work chamber (40; 78; 79).
